# EUROPEAN PATENT SPECIFICATION

(11) **EP 2 578 064 B1**
(45) Date of publication and mention of the grant of the patent: **14.11.2018**
(21) Application number: 11787208.5
(22) Date of filing: 24.05.2011
(51) Int. Cl.: H05B 37/02, H05B 41/38, H05B 33/08, H05B 39/04

(54) **DIMMER CONDUCTION ANGLE DETECTION CIRCUIT AND SYSTEM INCORPORATING THE SAME**
DIMMER-LEITUNGSWINKELERKENNUNGSSCHALTUNG UND SYSTEM DAMIT
CIRCUIT DE DÉTECTION D'ANGLE DE CONDUCTION DE GRADATEUR ET SYSTÈME COMPRENANT LEDIT CIRCUIT

(30) Priority: 27.05.2010 US 788629; 27.05.2010 US 788648
(43) Date of publication of application: 10.04.2013
(73) Proprietor: Osram Sylvania Inc., Danvers, MA 01923 (US)
(72) Inventor: ANISSIMOV, Viatcheslav, Lynn, Massachusetts 01902 (US)
(74) Representative: Viering, Jentschura & Partner mbB Patent- und Rechtsanwälte
(86) International application number: PCT/US2011/037638
(87) International publication number: WO 2011/149866

(56) References cited:
- EP-A1- 1 435 764
- JP-A- 2004 127 721
- KR-A- 20010 085 530
- KR-A- 20060 120 452
- KR-A- 20090 120 044
- KR-A- 20090 124 728
- US-A- 4 904 906
- US-A1- 2002 101 193
- US-A1- 2003 209 997
- US-A1- 2009 160 369
- US-A1- 2010 013 409

## Description

### TECHNICAL FIELD

The present invention relates to a dimmer conduction angle detection circuit and a system incorporating the circuit.

### BACKGROUND

Solid state light source based lamps (including light-emitting diode (LED) based lamps) and gas discharge lamps, such as high intensity discharge (HID) and fluorescent lamps, may be used in connection with a wide variety of applications. Such lamps are typically driven by a ballast circuit. The ballast circuit typically converts an input signal to a stable direct current (DC) or alternating current (AC) voltage used to drive the lamp. The ballast circuit may, for example, incorporate a rectifier to receive an AC input and a power conversion circuit. The power conversion circuit may receive an unregulated output from the rectifier and provide a stable, regulated output to the lamp.

When it is desired to provide an adjustable output illumination level for a lamp, a dimming control circuit may be used. The dimming control circuit may receive line voltage, e.g. from a 120VAC/60Hz source, and provide a modified output signal to the ballast rectifier for the purpose of controlling the illumination level of the lamp. In one configuration, the dimming control circuit may be a circuit known as a "phase control" dimmer or a "phase-cut" dimmer.

In a phase control dimmer, a fraction of the input voltage sine-wave is cut in each period of the waveform, i.e. the conduction angle of the input voltage sine-wave modified. During the cut-time interval or "dead time" when the voltage is cut, the output of the phase control dimmer may be substantially zero. The residual time interval where the voltage differs from zero is known as the "dimmer conduction time." Both the dimmer conduction time and the dead time are variable, but the time period of the input voltage waveform is constant, e.g. 1/60 second in the United States. As used herein, the "dimmer setting" refers to the ratio of the dimmer conduction time to the time period of the input waveform. The dimmer setting of a phase control dimmer is controllable by a user. In one configuration, the dimmer setting may be varied from about 0.78 to about 0.25.

The ballast circuit may be configured to regulate the lamp light output in response to the dimmer setting. In one configuration, the ballast circuit may include a conduction angle detection circuit for providing an output representative of the dimmer setting to the ballast power conversion circuit. The power conversion circuit may be configured to drive the lamp to establish a lamp light output corresponding to the output of the conduction angle detection circuit.

One known phase-control dimming setting detection circuit is a simple RC filter. The rectified output of the dimming control circuit may be provided to the input of the RC filter, and the output of the filter may be a DC signal proportional to the dimmer setting signal. Although an RC filter configuration is simple, it may provide an output that is sensitive not only to the dimmer setting but also to fluctuations in the line source voltage amplitude, which may result in undesired changes in the light output at a constant dimmer setting. Also, an RC filter configuration may not provide sufficient linearity of lamp light output regulation. Another known conduction angle detection circuit incorporates a microcontroller, which adds complexity and cost to the ballast circuit.

Japanese Patent JP2004 127721 discloses an illumination apparatus with a dimming signal circuit which has a phase-duty converting circuit.

### SUMMARY

According to embodiments disclosed herein, a conduction angle detection circuit receives a rectified voltage representative of a dimmer setting and provides a voltage-limited dimmer reference level output that is proportional to the dimmer setting. The dimmer reference level output is not significantly affected by fluctuations in source/line voltage magnitude and has good linearity with respect to changes in dimmer settings. The circuit may be used with ballasts having any input voltage level.

In an embodiment, there is provided a ballast circuit to drive a light source. The ballast circuit includes: a rectifier circuit configured to receive an AC input voltage from a dimmer circuit and to provide a rectified output voltage; a power conversion circuit configured to provide a regulated output to the light source in response to the rectified output voltage and a dimmer reference level signal representative of a dimmer setting of the dimmer circuit; and a conduction angle detection circuit, the conduction angle detection circuit coupled to an output of the rectifier to receive the rectified voltage, and coupled to an input of the power conversion circuit to provide the dimmer reference level signal to the power conversion circuit. The conduction angle detection circuit includes: a comparator having a first input and a second input and configured to provide a pulse-width modulated output in response to comparison of signals at the first input with signals at the second input, the pulse width modulated output having a pulse width representative of the dimmer setting of the dimmer circuit; a limiting circuit coupled to the comparator and configured to receive the rectified voltage and provide a voltage-limited output in response to the rectified voltage to the first input of the comparator, wherein the limiting circuit comprises a resistor coupled in parallel with a diode between first and second nodes, the first node being configured to receive the rectified voltage, and the second node being coupled to ground through a capacitor and to the first input; a threshold supply circuit configured to provide a threshold voltage to the second input of the comparator; and a filter coupled to the comparator, the filter being configured to convert the pulse-width modulated output of the comparator to the dimmer reference level signal.

In a related embodiment, the first input may be a non-inverting input of the comparator and the second input may be an inverting input of the comparator. In another related embodiment, the second node may be coupled to the first input through a resistor. In still another related embodiment, the first input to the comparator may be coupled to a supply voltage through a diode. In yet still another related embodiment, the threshold supply circuit may include first and second resistors provided in a voltage divider configuration, and the second input may be coupled between the first and second resistors.

In still yet another related embodiment, the filter may include a second order low pass filter configuration. In yet still another related embodiment, the ballast circuit may further include a feedback resistor coupled between the comparator output and the first input of the comparator. In still another related embodiment, the pulse width modulated signal may have a high voltage level limited to the DC value of a supply voltage to the comparator.

In another embodiment, there is provided a conduction angle detection circuit to receive a rectified voltage output of a rectifier and to provide a dimmer reference level signal representative of a dimmer setting of a dimmer circuit in response to the rectified voltage output. The conduction angle detection circuit includes: a comparator having a first input and a second input, the comparator configured to provide a pulse-width modulated output in response to comparison of signals at the first input with signals at the second input, the pulse width modulated output having a pulse width representative of the dimmer setting of the dimmer circuit; a limiting circuit coupled to the comparator and configured to receive the rectified voltage and to provide a voltage-limited output in response to the rectified voltage to the first input of the comparator; a threshold supply circuit configured to provide a threshold voltage to the second input of the comparator; and a filter coupled to the comparator, the filter being configured to convert the pulse-width modulated output of the comparator to the dimmer reference level signal.

In a related embodiment, the first input may be a non-inverting input of the comparator and the second input may be an inverting input of the comparator. In another related embodiment, the limiting circuit may include a resistor coupled in parallel with a diode between first and second nodes, the first node may be configured to receive the rectified voltage, and the second node may be coupled to ground through a capacitor and to the first input. In a further related embodiment, the second node may be coupled to the first input through a resistor.

In a related embodiment, the first input to the comparator may be coupled to a supply voltage through a diode. In another related embodiment, the threshold supply circuit may include first and second resistors provided in a voltage divider configuration, and the second input may be coupled between the first and second resistors. In still another related embodiment, the filter may include a second order low pass filter configuration. In yet another related embodiment, the conduction angle detection circuit may further include a feedback resistor coupled between the comparator output and the first input of the comparator. In still yet another related embodiment, the pulse width modulated signal may have a high voltage level limited to the DC value of a supply voltage to the comparator.

In another embodiment, there is provided a method of dimming a light source driven by a ballast according to claim 10.

### BRIEF DESCRIPTION OF THE DRAWINGS

The foregoing and other objects, features and advantages disclosed herein will be apparent from the following description of particular embodiments disclosed herein, as illustrated in the accompanying drawings in which like reference characters refer to the same parts throughout the different views. The drawings are not necessarily to scale, emphasis instead being placed upon illustrating the principles disclosed herein.
FIG. 1 is a block diagram of an embodiment as disclosed herein.
FIG. 2 is a block diagram of a ballast circuit according to embodiments disclosed herein.
FIG. 3 is a block diagram of a conduction angle detection circuit according to embodiments disclosed herein.
FIG. 4 is a circuit diagram of a conduction angle detection circuit according to embodiments disclosed herein.
FIG. 5A includes a plot of voltage vs. time of an input voltage to the circuit shown in FIG. 4 corresponding to a dimmer setting set at a maximum light output level.
FIG. 5B includes a plot of voltage vs. time of inputs to the comparator of the circuit shown in FIG. 4 corresponding to the input voltage shown in FIG. 5A.
FIG. 6A includes a plot of voltage vs. time of an input voltage to the circuit shown in FIG. 4 corresponding to a dimmer setting set at a minimum light output level.
FIG. 6B includes a plot of voltage vs. time of inputs to the comparator of the circuit shown in FIG. 4 corresponding to the input voltage shown in FIG. 6A.
FIG. 7A includes a plot of voltage vs. time of the output of the comparator and the output of the circuit shown in FIG. 4 corresponding to the input voltage shown in FIG. 5A.
FIG. 7B includes a plot of voltage vs. time of the output of the comparator and the output of the circuit shown in FIG. 4 corresponding to the input voltage shown in FIG. 6A.
FIG. 8 is a block flow diagram of a method according to embodiments disclosed herein.

### DETAILED DESCRIPTION

In general, circuits, systems, and methods according to embodiments described herein use a conduction angle detection circuit configured to provide a voltage-limited dimmer reference level output signal to a ballast power conversion circuit that is proportional to a dimmer setting. In some embodiments, the conduction angle detection circuit may include a comparator to compare a signal representative of the dimmer setting to a threshold level. The output of the comparator may be filtered to provide a voltage-limited DC dimmer reference level output to the ballast power conversion circuit. The ballast power conversion circuit may be configured to drive a lamp in response to the dimmer reference level output to achieve a lamp light output corresponding to the dimmer setting.

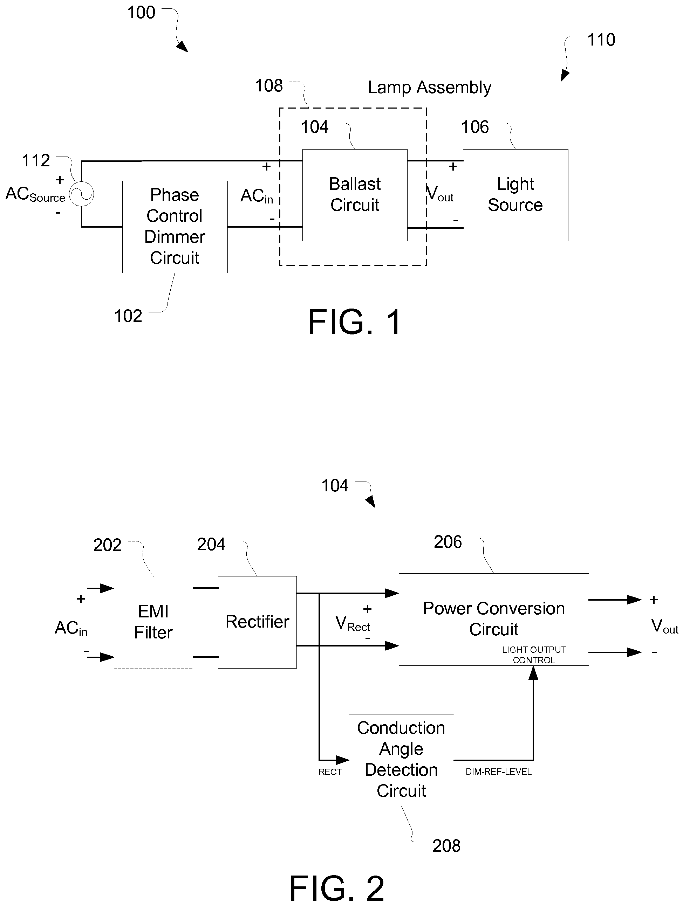

FIG. 1 is a simplified block diagram of one exemplary embodiment of a system 100. The system includes a known phase control dimmer circuit 102 coupled to a lamp assembly 110 including a ballast circuit 104 and a light source 106. The term "coupled" as used herein refers to any connection, coupling, link or the like by which signals carried by one system element are imparted to the "coupled" element. Such "coupled" devices, or signals and devices, are not necessarily directly connected to one another and may be separated by intermediate components or devices that may manipulate or modify such signals. Likewise, the terms "connected" or "coupled" as used herein in regard to mechanical or physical connections or couplings is a relative term and does not require a direct physical connection.

The phase control dimmer circuit 102 may take a known configuration, such as a standard or reverse phase control dimmer provided in a wall switch, the operation of which is well-known. As described above, the phase control dimmer circuit 102 cuts a fraction of the input voltage sine-wave AC_{Source} in each period of the waveform to provide an AC input ACᵢₙ to the ballast circuit 104 having an associated dimmer setting. In some embodiments, AC_{Source} may be a provided directly from a 120VAC/60Hz line source 112. It is to be understood, however, that a system consistent with the present application may operate from other AC sources, such as a 220-240 VAC source at 50-60Hz.

As described in detail below, the ballast circuit 104 includes a conduction angle detection circuit to provide a voltage-limited dimmer reference level output signal in response to the dimmer setting applied by the phase control dimmer. In response to the dimmer reference level output, the ballast is configured to convert the AC input voltage ACᵢₙ to a regulated output voltage Vₒᵤₜ to the light source for establishing a lamp light output level corresponding to the dimmer setting. The light source may be any gas discharge lamp, such as an HID or fluorescent lamp and/or may be a solid-state-based light source, including one or more light emitting diodes (LEDs) and variations thereof (e.g., OLEDs, PLEDs, etc.). The output voltage Vₒᵤₜ may be an AC or DC voltage depending on the lamp configuration.

The ballast circuit 104 may be disposed within a housing 108, such as within the housing of a parabolic aluminized reflector (PAR) lamp or a compact fluorescent lamp (CFL), and the light source 106 may be electrically coupled to the ballast circuit 104 and mechanically coupled to the housing 108 to provide a lamp assembly 110. The lamp assembly 110 may be configured to mate with existing lighting fixtures, such as those configured for use with incandescent lamps, and may be inserted directly into such lighting fixtures to operate on the AC input thereto, e.g. through a dimmer circuit.

FIG. 2 is a block diagram that conceptually illustrates the functionality of a ballast circuit 104. As shown, a ballast circuit 104 may include an optional electromagnetic interference (EMI) filter 202, a rectifier 204, a power conversion circuit 206, and a conduction angle detection circuit 208. In general, the AC input voltage ACᵢₙ may be coupled to the rectifier circuit 204 through the optional EMI filter 202. The EMI filter 202 may take a known configuration, such as an inductor and/or capacitor for passing the AC input voltage ACᵢₙ to the rectifier 204 and filtering EMI-related noise imparted to the output of the phase control dimmer circuit 102. The rectifier circuit 204 may be configured to rectify ACᵢₙ to provide a rectified output V_{Rect} that is representative of the dimmer setting applied by the phase control dimmer circuit 102. A variety of rectifier circuit configurations are well-known in the art. In some embodiments, for example, the rectifier circuit 204 may include a known bridge rectifier.

The output of the rectifier circuit 204 may be coupled to the input of the conduction angle detection circuit 208 and to the input of the power conversion circuit 206. The conduction angle detection circuit 208 is configured to receive the rectified output V_{Rect} as a RECT input and provide a voltage-limited dimmer reference level output DIM-REF-LEVEL proportional to the dimmer setting signal. The DIM-REF-LEVEL level output of the conduction angle detection circuit 208 is provided to the LIGHT OUTPUT CONTROL input of the power conversion circuit 206.

The power conversion circuit 206 may be a known circuit to receive the rectified output V_{Rect} and, in response to the DIM-REF-LEVEL output of the conduction angle detection circuit 208, provides a regulated output Vₒᵤₜ to the light source 106 configured to establish a light output level corresponding to the dimmer setting. If the dimmer setting changes, e.g. through user input, the DIM-REF-LEVEL output of the conduction angle detection circuit 208 changes correspondingly, and, in response to such change, the power conversion circuit 206 provides an output Vₒᵤₜ to the lamp to cause a corresponding change in the light output level of the light source 106.

In general, the power conversion circuit 206 may include known switching inverter, and the DIM-REF-LEVEL output to the power conversion circuit may control the switching frequency of the inverter to control the current output to the light source 106. One embodiment of a known power conversion circuit useful in a ballast circuit consistent with the present disclosure is described in U.S. Patent No. 6,486,616. Other known power conversion circuits useful in a ballast circuit configuration may include known integrated circuit controllers, such as model number L6574 and L6585 controllers presently available from ST Microelectronics of Sunnyvale, CA.

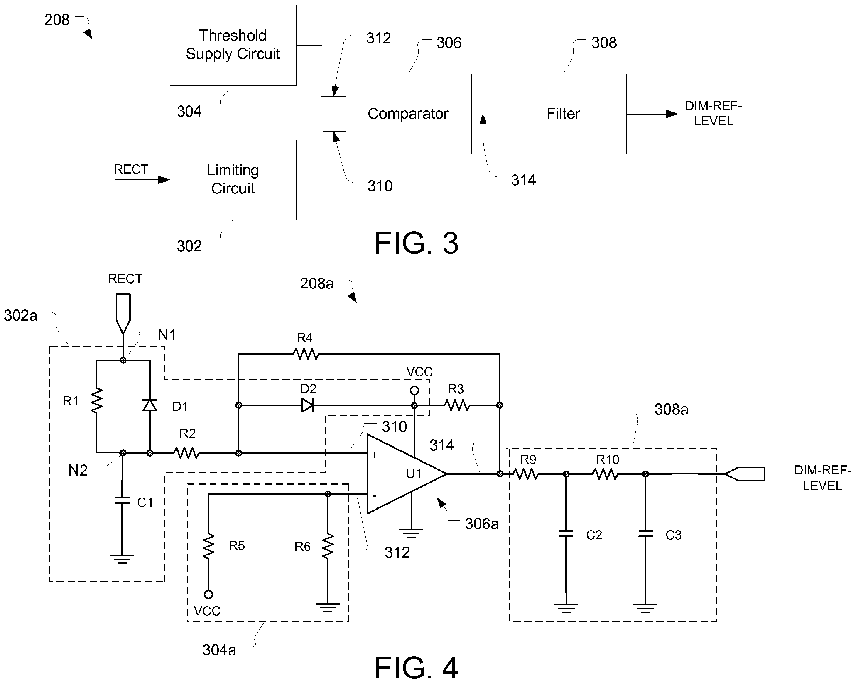

FIG. 3 is a block diagram that conceptually illustrates the functionality of a conduction angle detection circuit 208. As shown, the conduction angle detection circuit 208 may include a limiting circuit 302, a threshold supply circuit 304, a comparator 306, and a filter 308. The limiting circuit 302 may receive a RECT input from the output of the rectifier 204 and provide an output coupled to a first input 310, e.g. the non-inverting input, of the comparator 306. In general, since the RECT input to the limiting circuit 302 may be a high-voltage signal, e.g. having a peak voltage of 175V, to prevent damage to the comparator 306 the limiting circuit 302 may receive the RECT input and perform initial limiting of the output applied to the first input 310 of comparator. In some embodiments, for example, the limiting circuit 302 may limit the voltage applied to the first input 310 of the comparator 306 to a voltage approximately equal to the ballast supply voltage, V_{cc}. As is known, the supply voltage V_{cc} for operating a ballast and the components thereof may be self-supplied in the ballast configuration to ensure a regulated, stable supply to the circuit during operation.

The threshold supply circuit 304 may provide a threshold voltage to a second input 312, e.g. the inverting input, of the comparator 306. The comparator 306 compares the voltage-limited output of the limiting circuit 302 with the threshold voltage provided by the threshold supply circuit 306, and provides a pulse-width modulated output signal having a pulse width proportional to the dimmer setting. The output 314 of the comparator 306 is also limited to a value approximately equal to the supply voltage V_{cc} and is provided to the filter 308. The filter may be a known filter configured to receive the pulse-width modulated output of the comparator 306 and to provide the DC output DIM-REF-LEVEL proportional to the dimmer setting signal.

The DIM-REF-LEVEL output provided to the power conversion circuit 206 is thus voltage-limited, e.g. to a voltage approximately equal to the ballast supply voltage V_{cc}. This minimizes any impact of variation of in the amplitude of the rectified output V_{Rect} on the DIM-REF-LEVEL output to the power conversion circuit 206. In addition, the voltage-limited DIM-REF-LEVEL output to the power conversion circuit V_{Rect} is provided by a relatively simple conduction angle detection circuit 208 that does not include a complex and expensive microcontroller.

Those of ordinary skill in the art will recognize that a conduction angle detection circuit 208 as shown for example in FIG. 3 may be realized in a variety of configurations. One example of a configuration is a conduction angle detection circuit 208a, shown in FIG. 4. As shown, the conduction angle detection circuit 208a includes a limiting circuit 302a, a threshold supply circuit 304a, a comparator 306a, a feedback resistor R4, a pull-up resistor R3, and a filter 308a.

In general, the limiting circuit 302a includes resistors R1 and R2, diodes D1 and D2, and a capacitor C1. The diode D1 and the resistor R1 are coupled in parallel between nodes N1 and N2. The RECT input from the rectifier is coupled to the node N1. The node N2 is coupled to ground through the capacitor C1 and to the non-inverting input 310 of the comparator 306a through the resistor R2. The non-inverting input 310 is also coupled to the supply voltage V_{cc} through the diode D2.

In operation, the RECT input to the limiting circuit charges the capacitor C1 through the resistor R1 with a time constant defined by the resistor R1 and the capacitor C1. The capacitor C1 charges until the RECT input drops low enough for the voltage across the capacitor C1 to forward bias the diode D1. When the diode D1 is forward biased, the capacitor C1 discharges through the diode D1 providing near-zero voltage at the non-inverting input 310 of the comparator 306a. The voltage at the non-inverting input 310 is limited by the diode D2. In particular, the voltage at the non-inverting input 310 forward biases the diode D2 when it exceeds the value of V_{cc} added to the forward bias drop across the diode D2. This limits the voltage at the non-inverting input 310 to the value of V_{cc} added to the forward bias drop across the diode D2.

The threshold circuit supply circuit 304a includes resistors R5 and R6 in a voltage divider configuration. The supply voltage V_{cc} is coupled across the resistors R5 and R6, and the inverting input 312 to the comparator 306a is coupled between the resistors R5 and R6. The values of the resistors R5 and R6 thus determine the threshold voltage at the inverting input 312.

A low threshold voltage provides better accuracy in detecting the conduction and dead time of the phase control dimmer, but makes the output of the comparator 306a more sensitive to noise in the RECT input, which could cause false triggering of the comparator 306a. The capacitor C1 mitigates the effect of noise on the comparator 306a to avoid false triggering.

Although a low threshold provides more accuracy, it should be set high enough to account for residual voltage appearing at the output of the rectifier, e.g. rectifier 204. In particular, the voltage RECT at the rectifier output may not reach a zero level when the dimmer dead time is too short at a high light output level dimmer setting due to presence of a filtering capacitor at the rectifier output maintaining a residual voltage. The residual voltage may distort the voltage waveform at the output of the rectifier. As a result, the dimmer setting/conduction angle may not be detected accurately by the conduction angle detection circuit 306a, or the circuit might even skip pulses in the input voltage RECT, if the comparator threshold voltage is set too low.

The comparator 306a compares the voltage at the non-inverting input 310 and the inverting input 312 and provides a corresponding output. In particular, the comparator 306a provides a high voltage level at its output 314 when the voltage at the non-inverting input 310 has an amplitude greater than the threshold voltage at the inverting input 312, and provides a low voltage level at its output 314 when the voltage at the non-inverting 310 input has an amplitude that is less than the threshold voltage at the inverting input 312. The high voltage level output 314 of the comparator 306a is fixed and limited by the comparator to the supply voltage V_{cc}.

The supply voltage V_{cc} is connected through the pull-up resistor R3 to pull the comparator output 314 to its high voltage level after transitioning to a low level. The feedback resistor R4 is coupled between the comparator output 314 and the non-inverting input 310 to provide hysteresis. The feedback resistor R4 also avoids jitter at the comparator output 314 when the voltage at the non-inverting input 310 is equal to the voltage at the inverting input 312.

As shown, the filter 308a includes resistors R9 and R10 and capacitors C2 and C3 provided in known second order low pass filter configuration. The filter converts the square-wave output of the comparator to the DC output DIM-REF-LEVEL.

A conduction angle detection circuit may be configured for operation with a variety of input voltages based on appropriate selection of various circuit components thereof. TABLE 1 below identifies one example of circuit components useful in configuring the embodiment 208a illustrated in FIG. 4 for operation with a 120V RMs/60Hz AC source signal AC_{Source} (resistor values in ohms):

**TABLE 1**

| Component | Descriptor/Value |
|---|---|
| VCC | 15VDC |
| C1 | 100pf |
| C2 | 200nF |
| C3 | 200nF |
| D1 | GL34J |
| D2 | 1N4150 |
| R1 | 200k |
| R2 | 100 |
| R3 | 5k |
| R4 | 100k |
| R5 | 5k |
| R6 | 10k |
| R9 | 47k |
| R10 | 47k |
| U1 | LM239 |

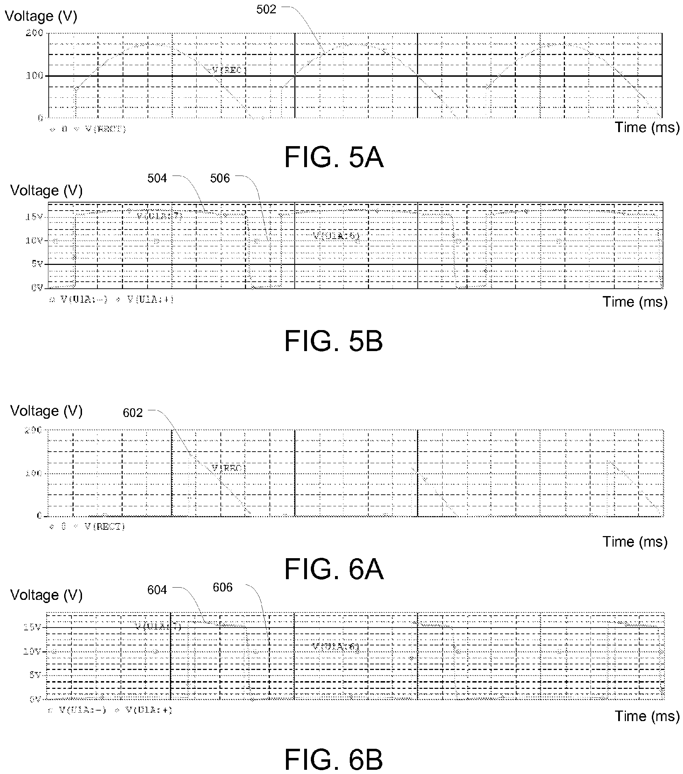

FIGS. 5A-5B and 6A-6B include simulated plots of the inputs to the limiting circuit 304a and the comparator 306a for the circuit shown in FIG. 4 with component values shown in TABLE 1, and for dimmer settings set at maximum and minimum light output levels, respectively. In particular, FIG. 5A includes a plot 502 of voltage vs. time of the RECT input to the limiting circuit 302a shown in FIG. 4 with a dimmer setting set at a maximum light output level. FIG. 5B includes plots 504, 506 of voltage vs. time of the inputs to the non-inverting and inverting inputs of the comparator 306a shown in FIG. 4 (i.e. the outputs of the limiting and threshold circuits, respectively) corresponding to RECT input shown in FIG. 5A. FIG. 6A includes a plot 602 of voltage vs. time of the RECT input to the limiting circuit 302a shown in FIG. 4 with a dimmer setting set at minimum light output level. FIG. 6B includes plots 604, 606 of voltage vs. time of the inputs to the non-inverting and inverting inputs of the comparator 306a shown in FIG. 4 (i.e. the outputs of the limiting and threshold circuits, respectively) corresponding to RECT input shown in FIG. 6A. In FIGS. 5A-5B and 6A-6B, the supply voltage V_{cc} is set at 15VDC and the output of the threshold circuit 304a at the inverting input to the comparator is about 10VDC, as illustrated by the plots 506, 606.

As illustrated by the plots 504 and 604, in response to the RECT input the limiting circuit produces a pulse-width modulated output to the non-inverting input 310 having a pulse width proportional to the dimmer setting. When the dimmer setting is set at a maximum light output to produce the RECT input shown in the plot 502 of FIG. 5A, the output of the limiting circuit at the non-inverting input 310 of the comparator has a maximum pulse width, as shown by the plot 504 of FIG. 5B. When the dimmer setting is set at a minimum light output level, to produce the RECT input shown in the plot 602 of FIG. 6A, the output of the limiting circuit at the non-inverting input 310 of the comparator has a minimum pulse width, as shown in the plot 604 of FIG. 6B. Also, when the supply voltage V_{cc} is set to about 15VDC, the output of the limiting circuit is limited to around 15.7 VDC as shown in FIGS. 5B and 6B. This protects the non-inverting input 310 of the comparator 306a from potentially damaging voltages associated with the RECT input, which in the illustrated embodiment peaks at about 175V as shown in FIG. 5A.

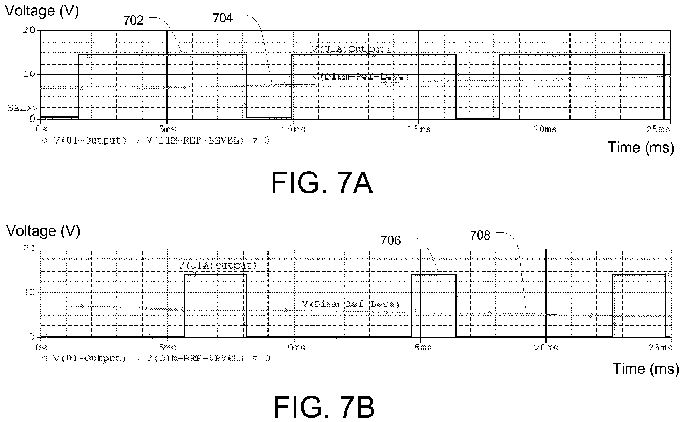

FIGS. 7A and 7B include simulated plots of the outputs of the comparator 306a and the DIM-REF-LEVEL outputs corresponding to the input waveforms shown in FIGS 5A-5B and 6A-6B, respectively. In particular, FIG. 7A includes plots 702, 704 of voltage vs. time of the comparator output and the DIM-REF-LEVEL output, respectively with a dimmer setting signal set at a maximum light output level, as shown in FIGS. 5A-5B. FIG. 7B includes plots 706,708 of voltage vs. time of the comparator output and the DIM-REF-LEVEL output, respectively, with a dimmer setting signal set at a minimum light output level, as shown in FIGS. 6A-6B.

As shown in the plots 702 and 706, the comparator 306a produces a pulse-width modulated output having a pulse width proportional to the dimmer setting. When the dimmer setting is set at a maximum light output level as shown in FIG. 7A, the output of comparator has a maximum pulse width, and the DIM-REF-LEVEL is about 10VDC as shown in the plot 704. When the dimmer setting is set at a minimum light output level, as shown in FIG. 7B, the output of the comparator has a minimum pulse width, and the DIM-REF-LEVEL is about 5VDC as shown in the plot 708. The conduction angle detection circuit thus produces a DIM-REF-LEVEL output to the power conversion circuit proportional to the dimmer setting (conduction angle) of the phase-control dimmer. The power conversion circuit adjusts the current output to the light source in response to DIM-REF-LEVEL output to establish a light output level corresponding to the dimmer setting.

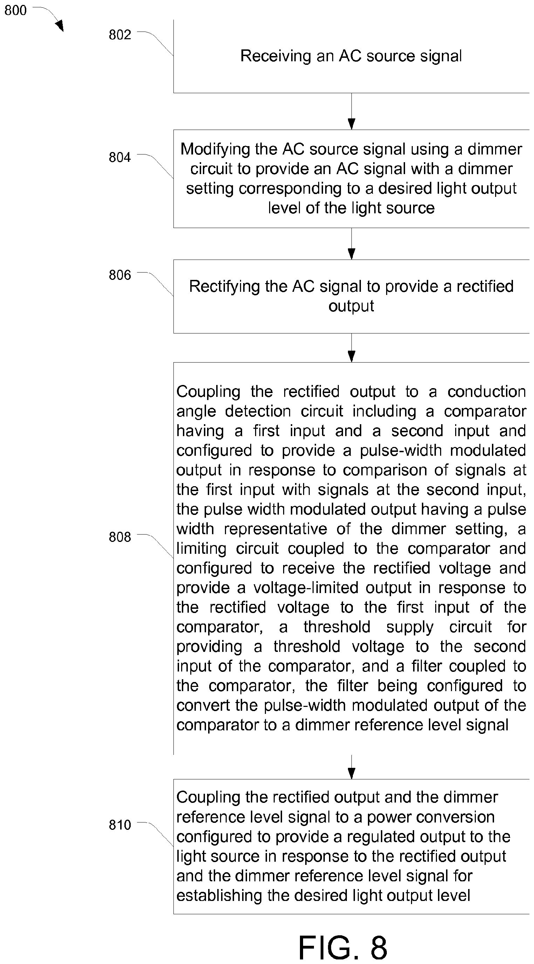

FIG. 8 is a block flow diagram of a method 800 of dimming a light source driven by a ballast consistent with the present disclosure. The illustrated block flow diagram may be shown and described as including a particular sequence of steps. It is to be understood, however, that the sequence of steps merely provides an example of how the general functionality described herein can be implemented. The steps do not have to be executed in the order presented unless otherwise indicated.

In FIG. 8, an AC source signal is received, step 802. The AC source signal is modified, step 804, using a dimmer circuit to provide an AC signal with a dimmer setting corresponding to a desired light output level of the light source. The AC signal is rectified, step 806, to provide a rectified output, and the rectified output is coupled, step 808, to a conduction angle detection circuit. The conduction angle detection circuit includes: a comparator having a first input and a second input and configured to provide a pulse-width modulated output in response to comparison of signals at the first input with signals at the second input, the pulse width modulated output having a pulse width representative of the dimmer setting; a limiting circuit coupled to the comparator and configured to receive the rectified voltage and provide a voltage-limited output in response to the rectified voltage to the first input of the comparator; a threshold supply circuit to provide a threshold voltage to the second input of the comparator; and a filter coupled to the comparator, the filter being configured to convert the pulse-width modulated output of the comparator to a dimmer reference level signal. The rectified output and the dimmer reference level signal are then coupled, step 810, to a power conversion configured to provide a regulated output to the light source in response to the rectified output and the dimmer reference level signal for establishing the desired light output level.

Unless otherwise stated, use of the word "substantially" may be construed to include a precise relationship, condition, arrangement, orientation, and/or other characteristic, and deviations thereof as understood by one of ordinary skill in the art, to the extent that such deviations do not materially affect the disclosed methods and systems.

Throughout the entirety of the present disclosure, use of the articles "a" or "an" to modify a noun may be understood to be used for convenience and to include one, or more than one, of the modified noun, unless otherwise specifically stated.

## Claims

1. A conduction angle detection circuit (208) to receive a rectified voltage output of a rectifier (204) and to provide a dimmer reference level signal representative of a dimmer setting of a dimmer circuit (102) in response to the rectified voltage output, the conduction angle detection circuit (208) comprising:
a comparator (306) having a first input and a second input, the comparator (306) configured to provide a pulse-width modulated output in response to comparison of signals at the first input with signals at the second input, the pulse width modulated output having a pulse width representative of the dimmer setting of the dimmer circuit (102);
a limiting circuit (302) coupled to the comparator (306) and configured to receive the rectified voltage and to provide a voltage-limited output in response to the rectified voltage to the first input of the comparator (306),
a threshold supply circuit (304) configured to provide a threshold voltage to the second input of the comparator (306); and
a filter (308) directly coupled to the comparator (306), the filter (308) being configured to convert the pulse-width modulated output of the comparator (306) to the dimmer reference level signal,
**characterised in that** the limiting circuit (302) comprises a resistor coupled in parallel with a diode between first and second nodes, the first node being configured to receive the rectified voltage, and the second node being coupled to ground through a capacitor and to the first input.

2. The conduction angle detection circuit (208) according to claim 1,
wherein the first input is a non-inverting input of the comparator (306) and the second input is an inverting input of the comparator (306).

3. The conduction angle detection circuit (208) according to claim 1,
wherein the second node is coupled to the first input through a resistor.

4. The conduction angle detection circuit (208) according to claim 1,
wherein the first input to the comparator (306) is coupled to a supply voltage through a second diode.

5. The conduction angle detection circuit (208) according to claim 1,
wherein the threshold supply circuit (304) comprises first and second resistors provided in a voltage divider configuration, and
wherein the second input is coupled between the first and second resistors.

6. The conduction angle detection circuit (208) according to claim 1,
wherein the filter (308) comprises a second order low pass filter configuration.

7. The conduction angle detection circuit (208) according to claim 1,
the conduction angle detection circuit (208) further comprising a feedback resistor coupled between the comparator (306) output and the first input of the comparator (306).

8. The conduction angle detection circuit (208) according to claim 1,
wherein the pulse width modulated signal has a high voltage level limited to the DC value of a supply voltage to the comparator (306).

9. A ballast circuit (104) to drive a light source (106), the ballast circuit (104) comprising:
a rectifier circuit (204) configured to receive an AC input voltage from a dimmer circuit (102) and to provide a rectified output voltage;
a power conversion circuit (206) configured to provide a regulated output to the light source (106) in response to the rectified output voltage and a dimmer reference level signal representative of a dimmer setting of the dimmer circuit (102); and
a conduction angle detection circuit (208) in accordance with any one of claims 1 to 8, the conduction angle detection circuit (208) coupled to an output of the rectifier circuit (204) to receive the rectified voltage, and coupled to an input of the power conversion circuit (206) to provide the dimmer reference level signal to the power conversion circuit (206).

10. A method of dimming a light source (106) driven by a ballast (104), the method comprising:
receiving an AC source signal;
modifying the AC source signal using a dimmer circuit (102) to provide an AC signal with a dimmer setting corresponding to a desired light output level of the light source (106);
rectifying the AC signal to provide a rectified output;
coupling the rectified output to a conduction angle detection circuit (208), wherein the conduction angle detection circuit (208) is configured to carry out the following steps:
comparing by a comparator (306) having a first input and a second input and providing a pulse-width modulated output in response to comparison of signals at the first input with signals at the second input, the pulse width modulated output having a pulse width representative of the dimmer setting;
receiving by a limiting circuit (302) coupled to the comparator (306) the rectified voltage and providing a voltage-limited output in response to the rectified voltage to the first input of the comparator (306),
wherein the limiting circuit (302) comprises a resistor coupled in parallel with a diode between first and second nodes, the first node being configured to receive the rectified voltage, and the second node being coupled to ground through a capacitor and to the first input;
providing by a threshold supply circuit (304) a threshold voltage to the second input of the comparator (306); and
converting by a filter (308) directly coupled to the comparator (306), the pulse-width modulated output of the comparator (306) to a dimmer reference level signal; and
coupling the rectified output and the dimmer reference level signal to a power conversion circuit (206) and providing a regulated output to the light source (106) in response to the rectified output and the dimmer reference level signal for establishing the desired light output level.

## Patentansprüche

1. Eine Leitungswinkeldetektionsschaltung (208) zum Empfangen einer gleichgerichteten Spannungsausgabe eines Gleichrichters (204) und zum Bereitstellen eines Dimmerreferenzpegelsignals repräsentierend eine Dimmereinstellung einer Dimmerschaltung (102) in Reaktion auf die gleichgerichtete Spannungsausgabe, die Leitungswinkeldetektionsschaltung (208) aufweisend:
einen Komparator (306) aufweisend einen ersten Eingang und einen zweiten Eingang, wobei der Komparator (306) eingerichtet ist zum Bereitstellen einer pulsweitenmodulierten Ausgabe in Reaktion auf einem Vergleich von Signalen an dem ersten Eingang mit Signalen an dem zweiten Eingang, wobei die pulsweitenmodulierte Ausgabe eine Impulsweite aufweist repräsentierend die Dimmereinstellung der Dimmerschaltung (102);
eine Begrenzerschaltung (302), die mit dem Komparator (306) gekoppelt ist und eingerichtet ist zum Empfangen der gleichgerichteten Spannung und zum Bereitstellen einer spannungsbegrenzten Ausgabe in Reaktion auf die gleichgerichtete Spannung zu dem ersten Eingang des Komparators (306);
eine Schwellenwertversorgungsschaltung (304), die eingerichtet ist zum Bereitstellen einer Schwellenspannung zu dem zweiten Eingang des Komparators (306); und
ein Filter (308), das direkt mit dem Komparator (306) gekoppelt ist, wobei das Filter (308) eingerichtet ist zum Konvertieren der pulsweitenmodulierten Ausgabe des Komparators (306) zu dem Dimmerreferenzpegelsignal,
**gekennzeichnet dadurch, dass** die Begrenzerschaltung (302) ein Widerstandsbauteil aufweist, das parallel gekoppelt ist mit einer Diode zwischen einen ersten und zweiten Knoten, wobei der erste Knoten zum Empfangen der gleichgerichteten Spannung eingerichtet ist, und wobei der zweite Knoten zu Masse mittels eines Kondensators und zu dem ersten Eingang gekoppelt ist.

2. Die Leitungswinkeldetektionsschaltung (208) gemäß Anspruch 1,
wobei der erste Eingang ein nichtinvertierender Eingang des Komparators (306) ist und der zweite Eingang ein invertierender Eingang des Komparators (306) ist.

3. Die Leitungswinkeldetektionsschaltung (208) gemäß Anspruch 1,
wobei der zweite Knoten mittels eines Widerstandsbauteils zu dem ersten Eingang gekoppelt ist.

4. Die Leitungswinkeldetektionsschaltung (208) gemäß Anspruch 1,
wobei der erste Eingang zu dem Komparator (306) mittels einer zweiten Diode zu einer Versorgungsspannung gekoppelt ist.

5. Die Leitungswinkeldetektionsschaltung (208) gemäß Anspruch 1,
wobei die Schwellenwertversorgungsschaltung (304) ein erstes und zweites Widerstandsbauteil aufweist, die in einer Spannungsteilerkonfiguration vorgesehen sind, und
wobei der zweite Eingang zwischen das erste und zweite Widerstandsbauteil gekoppelt ist.

6. Die Leitungswinkeldetektionsschaltung (208) gemäß Anspruch 1,
wobei das Filter (308) eine Zweite-Ordnung-Tiefpassfilter-Konfiguration aufweist.

7. Die Leitungswinkeldetektionsschaltung (208) gemäß Anspruch 1,
wobei die Leitungswinkeldetektionsschaltung (208) ferner ein Feedback-Widerstandsbauteil aufweist, das zwischen den Komparators-(306)-Ausgang und den ersten Eingang des Komparators (306) gekoppelt ist.

8. Die Leitungswinkeldetektionsschaltung (208) gemäß Anspruch 1,
wobei das pulsweitenmodulierte Signal einen hohen Spannungspegel aufweist begrenzt auf den DC-Wert einer Versorgungsspannung zu dem Komparator (306).

9. Eine Ballastschaltung (104) zum Betreiben einer Lichtquelle (106), die Ballastschaltung (104) aufweisend:
eine Gleichrichterschaltung (204) eingerichtet zum Empfangen einer AC-Eingangsspannung aus einer Dimmerschaltung (102) und zum Bereitstellen einer gleichgerichteten Ausgangsspannung;
eine Energieumwandlungsschaltung (206) eingerichtet zum Bereitstellen einer geregelten Ausgabe zu der Lichtquelle (106) in Reaktion auf die gleichgerichtete Ausgangsspannung und ein Dimmerreferenzpegelsignal repräsentierend eine Dimmereinstellung der Dimmerschaltung (102); und
eine Leitungswinkeldetektionsschaltung (208) gemäß einem der Ansprüche 1 bis 8, wobei die Leitungswinkeldetektionsschaltung (208) zu einem Ausgang der Gleichrichterschaltung (204) gekoppelt ist zum Empfangen der gleichgerichteten Spannung und zu einem Eingang der Energieumwandlungsschaltung (206) gekoppelt ist zum Bereitstellen des Dimmerreferenzpegelsignals zu der Energieumwandlungsschaltung (206).

10. Verfahren des Dimmens einer mittels eines Vorschaltgeräts (104) betriebenen Lichtquelle (106), das Verfahren aufweisend:
Empfangen eines AC-Quellensignals;
Modifizieren des AC-Quellensignals unter Verwendung einer Dimmerschaltung (102) zum Bereitstellen eines AC-Signals mit einer Dimmereinstellung korrespondierend zu einem gewünschten Lichtausgangspegel der Lichtquelle (106);
Gleichrichten des AC-Signals zum Bereitstellen einer gleichgerichteten Ausgabe;
Koppeln der gleichgerichteten Ausgabe zu einer Leitungswinkeldetektionsschaltung (208), wobei die Leitungswinkeldetektionsschaltung (208) eingerichtet ist zum Ausführen der folgenden Schritte:
Vergleichen mittels eines Komparators (306) aufweisend einen ersten Eingang und einen zweiten Eingang und Bereitstellen einer pulsweitenmodulierten Ausgabe in Reaktion auf Vergleichen von Signalen an dem ersten Eingang mit Signalen an dem zweiten Eingang, wobei die pulsweitenmodulierte Ausgabe eine Impulsweite aufweist repräsentierend die Dimmereinstellung;
Empfangen der gleichgerichteten Spannung mittels einer Begrenzerschaltung (302), die mit dem Komparator (306) gekoppelt ist, und Bereitstellen einer spannungsbegrenzten Ausgabe in Reaktion auf die gleichgerichtete Spannung zu dem ersten Eingang des Komparators (306),
wobei die Begrenzerschaltung (302) ein Widerstandsbauteil aufweist, das parallel gekoppelt ist mit einer Diode zwischen einen ersten und zweiten Knoten, wobei der erste Knoten zum Empfangen der gleichgerichteten Spannung eingerichtet ist, und wobei der zweite Knoten zu Masse mittels eines Kondensators und zu dem ersten Eingang gekoppelt ist;
Bereitstellen mittels einer Schwellenwertversorgungsschaltung (304) einer Schwellenspannung zu dem zweiten Eingang des Komparators (306); und
Konvertieren der pulsweitenmodulierten Ausgabe des Komparators (306) zu einem Dimmerreferenzpegelsignal mittels eines Filters (308), das direkt mit dem Komparator (306) gekoppelt ist; und
Koppeln der gleichgerichteten Ausgabe und des Dimmerreferenzpegelsignals zu einer Energieumwandlungsschaltung (206) und Bereitstellen einer geregelten Ausgabe zu der Lichtquelle (106) in Reaktion auf die gleichgerichtete Ausgabe und das Dimmerreferenzpegelsignal zum Einrichten des gewünschten Lichtausgangspegels.

## Revendications

1. Circuit de détection d'angle de conduction (208) pour recevoir une sortie de tension redressée d'un redresseur (204) et pour fournir un signal de niveau de référence de gradateur représentatif d'un réglage de gradation d'un circuit gradateur (102) en réponse à la sortie de tension redressée, le circuit de détection d'angle de conduction (208) comprenant :
un comparateur (306) ayant une première entrée et une seconde entrée, le comparateur (306) étant configuré pour fournir une sortie modulée en largeur d'impulsion en réponse à une comparaison de signaux à la première entrée avec des signaux à la seconde entrée, la sortie modulée en largeur d'impulsion ayant une largeur d'impulsion représentative du réglage de gradation du circuit gradateur (102) ;
un circuit limiteur (302) couplé au comparateur (306) et configuré pour recevoir la tension redressée et pour fournir une sortie limitée en tension en réponse à la tension redressée à la première entrée du comparateur (306),
un circuit d'alimentation de seuil (304) configuré pour fournir une tension de seuil à la seconde entrée du comparateur (306) ; et
un filtre (308) directement couplé au comparateur (306), le filtre (308) étant configuré pour convertir la sortie modulée en largeur d'impulsion du comparateur (306) en le signal de niveau de référence de gradateur, **caractérisé en ce que** le circuit limiteur (302) comprend une résistance couplée en parallèle avec une diode entre des premier et second noeuds, le premier noeud étant configuré pour recevoir la tension redressée, et le second noeud étant couplé à la masse par l'intermédiaire d'un condensateur et à la première entrée.

2. Circuit de détection d'angle de conduction (208) selon la revendication 1, dans lequel la première entrée est une entrée non inverseuse du comparateur (306) et la seconde entrée est une entrée inverseuse du comparateur (306).

3. Circuit de détection d'angle de conduction (208) selon la revendication 1, dans lequel le second noeud est couplé à la première entrée par une résistance.

4. Circuit de détection d'angle de conduction (208) selon la revendication 1, dans lequel la première entrée du comparateur (306) est couplée à une tension d'alimentation par une seconde diode.

5. Circuit de détection d'angle de conduction (208) selon la revendication 1, dans lequel le circuit d'alimentation de seuil (304) comprend des première et seconde résistances pourvues dans une configuration de diviseur de tension, et
dans lequel la seconde entrée est couplée entre les première et seconde résistances.

6. Circuit de détection d'angle de conduction (208) selon la revendication 1, dans lequel le filtre (308) comprend une configuration de filtre passe-bas de second ordre.

7. Circuit de détection d'angle de conduction (208) selon la revendication 1, le circuit de détection d'angle de conduction (208) comprenant en outre une résistance de rétroaction couplée entre la sortie du comparateur (306) et la première entrée du comparateur (306) .

8. Circuit de détection d'angle de conduction (208) selon la revendication 1, dans lequel le signal modulé en largeur d'impulsion a un niveau de haute tension limité à la valeur continue d'une tension d'alimentation du comparateur (306).

9. Circuit de ballast (104) pour commander une source lumineuse (106), le circuit de ballast (104) comprenant :
un circuit redresseur (204) configuré pour recevoir une tension d'entrée AC d'un circuit gradateur (102) et pour fournir une tension de sortie redressée ;
un circuit de conversion de puissance (206) configuré pour fournir une sortie régulée à la source de lumière (106) en réponse à la tension de sortie redressée et à un signal de niveau de référence de gradateur représentatif d'un réglage de gradation du circuit gradateur (102) ; et
un circuit de détection d'angle de conduction (208) selon l'une quelconque des revendications 1 à 8, le circuit de détection d'angle de conduction (208) étant couplé à une sortie du circuit redresseur (204) pour recevoir la tension redressée, et couplé à une entrée du circuit de conversion de puissance (206) pour fournir le signal de niveau de référence de gradateur au circuit de conversion de puissance (206).

10. Procédé de gradation d'une source de lumière (106) commandée par un ballast (104), le procédé comprenant les étapes suivantes :
recevoir un signal source AC ;
modifier le signal source AC au moyen d'un circuit gradateur (102) pour fournir un signal AC avec un réglage de gradation correspondant à un niveau de sortie de lumière souhaité de la source de lumière (106) ;
redresser le signal AC pour fournir une sortie redressée ;
coupler la sortie redressée à un circuit de détection d'angle de conduction (208), où le circuit de détection d'angle de conduction (208) est configuré pour exécuter les étapes suivantes :
comparer, par un comparateur (306) ayant une première entrée et une seconde entrée et fournissant une sortie modulée en largeur d'impulsion en réponse à une comparaison de signaux à la première entrée avec des signaux à la seconde entrée, la sortie modulée en largeur d'impulsion ayant une largeur d'impulsion représentative du réglage de gradation ;
recevoir, par un circuit limiteur (302) couplé au comparateur (306), la tension redressée, et fournir une sortie limitée en tension en réponse à la tension redressée à la première entrée du comparateur (306), où le circuit limiteur (302) comprend une résistance couplée en parallèle avec une diode entre les premier et second noeuds, le premier noeud étant configuré pour recevoir la tension redressée, et le second noeud étant couplé à la masse par l'intermédiaire d'un condensateur et à la première entrée ;
fournir, par un circuit d'alimentation de seuil (304), une tension de seuil à la seconde entrée du comparateur (306) ; et
convertir, par un filtre (308) directement couplé au comparateur (306), la sortie modulée en largeur d'impulsion du comparateur (306) en un signal de niveau de référence de gradateur ; et
coupler la sortie redressée et le signal de niveau de référence de gradateur à un circuit de conversion de puissance (206) et fournir une sortie régulée à la source de lumière (106) en réponse à la sortie redressée et au signal de niveau de référence de gradateur pour établir le niveau de sortie de lumière souhaité.
